# EUROPÄISCHE PATENTANMELDUNG

(11) **EP 1 852 391 A1**
(43) Veröffentlichungstag der Anmeldung: **07.11.2007**
(21) Anmeldenummer: 06009034.7
(22) Anmeldetag: 02.05.2006
(51) Int. Cl.: C01B 13/02, B01J 19/12, B01J 19/08

(54) **Vorrichtung und Verfahren zur Erzeugung eines durch Singulett-Sauerstoff aktivierten Fluids**

(71) Anmelder: Medical Biophysics GmbH, 16761 Henningsdorf (DE)
(72) Erfinder: Günzel, Silko, 53721 Siegburg (DE)
(74) Vertreter: Müller, Thomas Michael

(57) **Zusammenfassung**

Vorrichtung und Verfahren zur Erzeugung eines durch Singulett-Sauerstoff aktivierten Fluids mit einem Aufnahmebehälter 1, der eine Aufnahmekammer 2, die zumindest mit einem Photosensibilisator und mit in den Singulett-Zustand anregbaren Sauerstoff befüllt ist, umschließt, umfasst, wobei der Aufnahmebehälter 1 zumindest eine lichtdurchlässige Lichteinfallwand 3 aufweist, durch die Licht von außen in die Aufnahmekammer 2 einfallen kann. Die Aufnahmekammer 2 ist nach außen hin vollständig geschlossen und der Aufnahmebehälter 1 weist zumindest eine lichtdurchlässige Aktivierungswand 4 auf, an deren von der Aufnahmekammer 2 abgewandten Seite das zu aktivierende Fluid aktiviert werden kann.

## Beschreibung

Die Erfindung betrifft eine Vorrichtung zur Erzeugung eines durch Singulett-Sauerstoff aktivierten Fluids, welche einen Aufnahmebehälter, der eine Aufnahmekammer, die zumindest mit einem Photosensibilisator und mit in den Singulett-Zustand anregbaren Sauerstoff befüllt ist, umschließt, umfasst, wobei der Aufnahmebehälter zumindest eine lichtdurchlässige Lichteinfallwand aufweist, durch die Licht von außen in die Aufnahmekammer einfallen kann.

Ferner betrifft die Erfindung ein Verfahren zur Erzeugung eines durch Singulett-Sauerstoff aktivierten Fluids bei dem ein Photosensibilisator sowie Sauerstoff in einer durch einen Aufnahmebehälter gebildeten Aufnahmekammer bereitgestellt wird und der Photosensibilisator mit Licht durch eine lichtdurchlässige Lichteinfallwand des Aufnahmebehälters bestrahlt wird.

Sauerstoff befindet sich normalerweise im Triplett-Zustand und kann z.B. auf photophysikalischem Wege in den energiereicheren Singulett-Zustand angeregt werden. Singulett-Sauerstoff ist extrem kurzlebig und nimmt in kürzester Zeit nach Anregung in den Singulett-Zustarid wieder den Triplett-Zustand ein. Beim Rückfall in den Triplett-Zustand wir Energie frei, die z.B. an Wasser abgegeben werden kann, das dadurch physikalisch verändert wird. Dieser Zustand wird im folgenden als aktivierter Zustand bezeichnet. Die zugrunde liegenden Mechanismen sind nicht vollständig geklärt, jedoch ist davon auszugehen, dass sich die Struktur des Wassers, in dem die einzelnen Wasserstoffmoleküle durch Wasserstoffbrücken miteinander verbunden sind, verändert. Dies zeigt sich an einem veränderten Infrarot-Absorptionsband von aktiviertem Wasser.

Der eigentliche photophysikalische Prozess verläuft in mehreren Schritten und erfordert die Anwesenheit von Sauerstoff. Der Photosensibilisator wird mit Licht angestrahlt und absorbiert Photonen des Lichtes und wird in einen angeregten Singulett-Zustand oder auch in einen angeregten Triplett-Zustand angehoben. Trifft nun ein Sauerstoff-Molekül, dessen Grundzustand der Triplett-Zustand ist, auf den energetisch angehobenen Photosensibilisator, findet ein Energieaustausch statt, wobei das Sauerstoff-Molekül in den kurzlebigen Singulett-Zustand angeregt wird.

Der praktische Nutzen der Aktivierung eines Fluids liegt zum Beispiel darin, das durch Einatmen von mit aktiviertem Wasser befeuchteter Luft die natürliche Fähigkeit zur Sauerstoffnutzung verbessert wird. Ferner wurde festgestellt, dass sich das Wachstum von Pflanzen durch aktiviertes Wasser verbessern lässt.

Eine eingangs genannte Vorrichtung sowie ein eingangs genanntes Verfahren sind in der WO 02126621 A1 offenbart. In der Aufnahmekammer ist eine aufgeraute Fläche vorgesehen, wobei in die Vertiefungen der fein aufgerauten Fläche der Photosensibilisator einpoliert ist. Der Aufnahmebehälter weist einen Lufteinlass und einen Luftauslass auf, um feuchte Luft durch die Aufnahmekammer hindurchleiten zu können. Somit ist der Luftsauerstoff in unmittelbaren Kontakt zum Photosensibilisator und kann von diesem in den Singulett-Zustand angeregt werden. Beim Rücksprung in den Triplett-Zustand wird die dabei freiwerdende Energie unmittelbar an die in der Luft enthaltenden Wassermoleküle abgegeben. Die Luft kann dann als Atemluft dienen. Bei der Herstellung ist jedoch darauf zu achten, dass der Photosensibilisator fest mit einem Substrat, welches die aufgeraute Fläche aufweist, verbunden ist, damit keine Photosensibilisatorpartikel in die Luft gelangt, da die als Photosensibilisator verwendeten Stoffe gesundheitsschädlich sein können.

Aufgabe der Erfindung ist es, eine eingangs genannte Vorrichtung derart zu verbessern, dass diese einfacher aufgebaut und gefertigt werden kann.

Die Aufgabe wird erfindungsgemäß dadurch gelöst, dass die Aufnahmekammer nach außen hin vollständig geschlossen ist und dass der Aufnahmebehälter zumindest eine lichtdurchlässige Aktivierungswand aufweist, an deren von der Aufnahmekammer abgewandten Seite das zu aktivierende Fluid aktiviert werden kann.

Somit wird Sauerstoff in den Singulett-Zustand überführt, der nicht Bestandteil des durch Singulett-Sauerstoff aktivierten Fluids ist. Ferner wird sichergestellt, dass das durch Singulett-Sauerstoff zu aktivierte Fluid nicht in Kontakt mit dem Photosensibilisator gelangt, so dass keine Gefahr besteht, dass der Photosensibilisator in das zu aktivierende Fluid gelangt. Dadurch sind feste Verbindungen zwischen dem Photosensibilisator und einem Substrat nicht erforderlich. Der Photosensibilisator kann lose in der Aufnahmekammer enthalten bzw. in diese eingefüllt sein. Die Fertigung der Vorrichtung ist somit deutlich einfacher und kostengünstiger.

Die Lichteinfallwand und die Aktivierungswand können aus einem beliebigen lichtdurchlässigen Material, wie zum Beispiel Glas oder Kunststoff, hergestellt sein.

Es kann vorgesehen sein, dass die Lichteinfallwand gleichzeitig die Aktivierungswand darstellt. Somit befindet sich die Lichtquelle auf derselben Seite wie das zu aktivierende Fluid, nämlich auf der Seite der Lichteinfall- und Aktivierungswand.

Alternativ kann vorgesehen sein, dass auf einer ersten Seite der Aufnahmekammer die Lichteinfallwand und auf einer zweiten Seite die Aktivierungswand vorgesehen ist. Vorzugsweise ist die Aktivierungswand der Lichteinfallwand gegenüberliegend angeordnet.

Der Aufnahmebehälter kann zum Beispiel quaderförmig oder als Kugel gestaltet sein. Ferner kann vorgesehen sein, dass der Aufnahmebehälter ein äußeres Rohr und ein inneres Rohr umfasst, die ineinander angeordnete sind, wobei die Aufnahmekammer zwischen den beiden Rohren gebildet ist, und dass das äußere Rohr die Lichteinlasswand darstellt und das innere Rohr die Aktivierungswand.

Vorzugsweise liegt der Photosensibilisator in Pulverform vor, so dass dieser einfach in die Aufnahmekammer eingefüllt werden kann. Der Photosensibilisator kann dann z. B. durch Oszillation des Aufnahmebehälters bei verschlossener Aufnahmekammer gleichmäßig und flächig verteilt werden. Als Photosensibilisator können Farbstoffe, die durch Absorption von Photonen zur Bildung von Singulett-Sauerstoff angeregt werden können, zum Einsatz kommen. Es können unter anderem Porhpyrin- und Chlorophyll-Derivate, synthetische Phthalocyanine und Naphthalocyanine sowie die Thiazinfarbstoffe Methylenblau und Toluidinblau eingesetzt werden.

Für einen Lichteinfall in die Aufnahmekammer kann eine Lichtquelle vorgesehen sein, die auf der der Aufnahmekammer abgewandten Seite der mindestens einen Lichteinfallwand angeordnet ist. Bei der Lichtquelle kann es sich grundsätzlich um eine die natürliche Lichtquelle Sonne oder um eine künstliche Lichtquelle wie zum Beispiel eine Leuchtdiode (LED, OLED), einen Halogenstrahler oder einen Laser etc. handeln.

Um einen definierten Durchfluss des zu aktivierenden Fluids zu gewährleisten, kann vorgesehen sein, dass ein Durchflusskanal für das zu aktivierende Fluid vorgesehen ist, der auf der der Aufnahmekammer abgewandten Seite der mindestens einen Aktivierungswand angeordnet ist und unmittelbar an diese angrenzt.

Der Durchflusskanal kann auf der der Aufnahmekammer abgewandten Seite einer lichtdurchlässigen Wand, die sowohl die Lichteinfallwand als auch die Aktivierungswand darstellt, durch eine lichtdurchlässige Kanalbegrenzungswand begrenzt sein, wobei für einen Lichteinfall in die Aufnahmekammer auf der der Aufnahmekammer abgewandten Seite der Kanalbegrenzungswand zumindest eine Lichtquelle angeordnet ist.

Alternativ kann vorgesehen sein, dass der Durchflusskanal auf der der Aufnahmekammer abgewandten Seite der mindestens einen lichtdurchlässigen Wand, die sowohl die Lichteinfallwand als auch die Aktivierungswand darstellt, durch eine Kanalbegrenzungswand begrenzt ist, in die für einen Lichteinfall in die Aufnahmekammer zumindest eine Lichtquelle integriert ist.

Eine weitere Aufgabe der Erfindung besteht darin, ein eingangs genanntes Verfahren derart zu verbessern, dass keine Gefahr des Übergangs von Photosensibilisators in das zu aktivierende Fluid besteht.

Die Aufgabe wird erfindungsgemäß dadurch gelöst, dass das Fluid außerhalb der Aufnahmekammer entlang einer lichtdurchlässigen Aktivierungswand des Aufnahmebehälters vorbeigeleitet wird.

Die Spektralverteilung ist an den maximalen Absorptionswellenlängenbereich des Photosensibilisators angepasst.

Vorzugsweise handelt es sich bei dem zu aktivierenden Fluid um feuchte Luft oder um Wasser in der flüssigen Phase.

Bevorzugte Ausführungsbeispiele der erfindungsgemäßen Vorrichtung werden im folgenden anhand der Figuren näher erläutert.

Hierin zeigt
- Figur 1: einen Längsschnitt einer ersten Ausführungsform einer erfindungsgemäßen Vorrichtung mit einer Lichteinfallwand und einer davon separaten Aktivierungswand;
- Figur 2: einen Längsschnitt einer Erweiterung der Vorrichtung gemäß der ersten Ausführungsform mit einem Durchflusskanal;
- Figur 3: einen Längsschnitt einer zweiten Ausführungsform einer erfindungsgemäßen Vorrichtung mit einer Lichteinfallwand, die gleichzeitig die Aktivierungswand darstellt;
- Figur 4: einen Längsschnitt einer Erweiterung der Vorrichtung gemäß der zweiten Ausführungsform mit einem Durchflusskanal;
- Figur 5: einen Längsschnitt einer dritten Ausführungsform einer erfindungsgemäßen Vorrichtung mit einem Aufnahmebehälter in Form eines doppelwandigen Rohres;
- Figur 6: einen Querschnitt der Vorrichtung gemäß Figur 5 und
- Figur 7: einen Längsschnitt einer vierten Ausführungsform einer erfindungsgemäßen Vorrichtung mit einem Aufnahmebehälter in Form einer Hohlkugel.

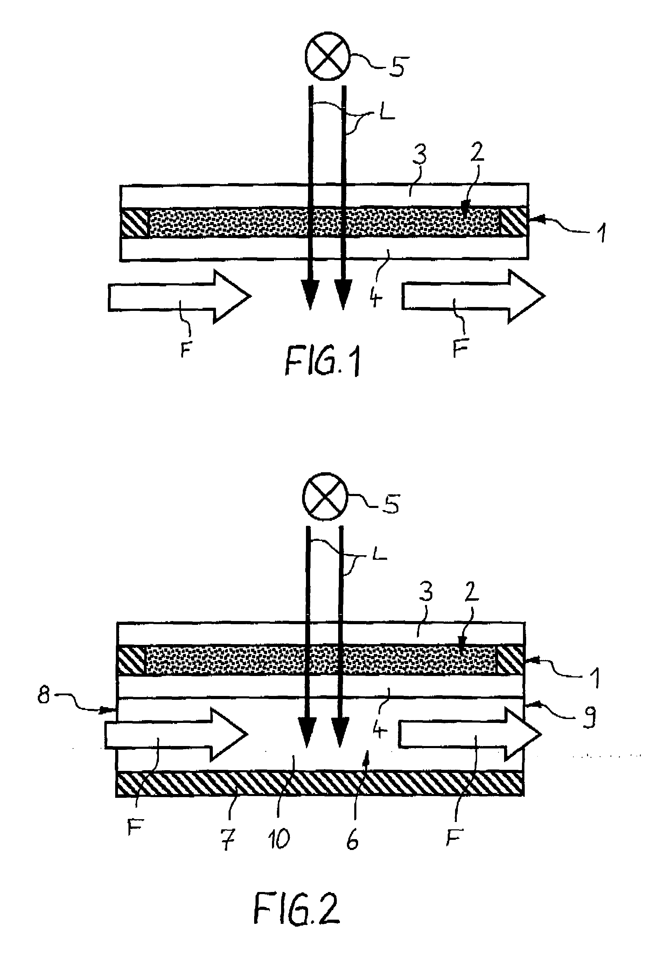

Figur 1 zeigt eine erste Ausführungsform einer erfindungsgemäßen Vorrichtung mit einem Aufnahmebehälter 1, der eine Aufnahmekammer 2 bildet und umschließt, wobei die Aufnahmekammer 2 nach außen hin vollständig geschlossen bzw. abgedichtet ist. In der Aufnahmekammer 2 befindet sich ein Material, das als Photosensibilisator dient, sowie Sauerstoff oder ein sauerstoffhaltiges Gas.

Der Aufnahmebehälter 1 umfasst eine lichtdurchlässige Lichteinfallwand 3, durch die Licht (angedeutet durch Pfeile L) einer Lichtquelle 5 in die Aufnahmekammer 2 einfallen kann. Bei der Lichtquelle 5 kann es sich um eine die natürliche Lichtquelle Sonne oder um eine künstliche Lichtquelle wie zum Beispiel eine Leuchtdiode (LED, OLEO), einen Halogenstrahler oder einen Laser etc. handeln.

Auf der der Lichteinfallwand 3 abgewandten Seite weist der Aufnahmebehälter 1 eine lichtdurchlässige Aktivierungswand 4 auf, an deren von der Aufnahmekammer 2 abgewandten Außenseite sich das zu aktivierende Fluid (angedeutet durch Pfeile F) befindet und aktiviert werden kann.

Durch den Lichteinfall durch die Lichteinfallwand 3 in die Aufnahmekammer 2 wird der Photosensibilisator aus einem Grundzustand in einen energiereicheren angeregten Zustand überführt. Diese Energie führt zur Anregung des in der Aufnahmekammer 2 befindlichen Sauerstoffs in den Singulett-Zustand. Beim Rücksprung des Singulett-Sauerstoffs in den Triplett-Zustand wird Energie frei, die von den Wassermolekülen des zu aktivierenden Fluids aufgenommen wird. Hierbei tritt die Energie durch die Aktivierungswand 4 hindurch.

Die Vorrichtung gemäß Figur 1 kann derart weitergebildet werden, dass, wie in Figur 2 dargestellt, die Vorrichtung einen Durchflusskanal 6 aufweist, der auf der der Aufnahmekammer 2 abgewandten Seite der Aktivierungswand 4 angeordnet ist und unmittelbar an diese angrenzt. Der Durchflusskanal 6 ist durch Kanalbegrenzungswände 6, 10 gebildet, wobei die Aktivierungswand 4 ebenfalls als Kanalbegrenzungswand dient.

Der Durchflusskanal 6 weist eine Einlassöffnung 8 und eine Auslassöffnung 9 auf, so dass durch die Einlassöffnung 8 das zu aktivierende Fluid in den Durchflusskanal 6 eingeleitet und aus der Auslassöffnung 9 herausgeleitet werden kann.

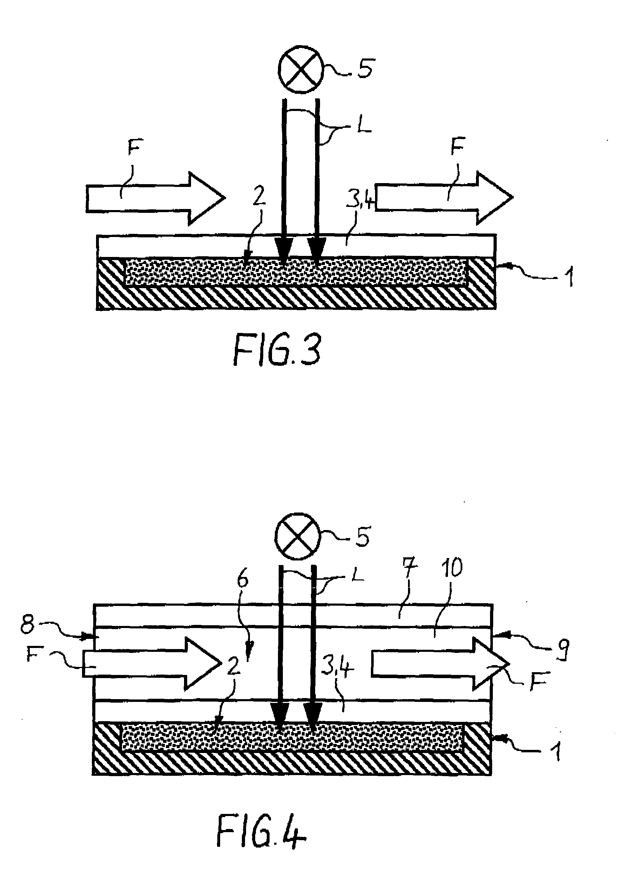

Eine zweite Ausführungsform einer erfindungsgemäßen Vorrichtung zeigt Figur 3, wobei Bauteile, die mit Bauteilen der Figur 1 übereinstimmen, mit denselben Bezugszeichen versehen sind.

Die zweite Ausführungsform unterscheidet sich von der ersten dadurch, dass die Lichteinfallwand 3 gleichzeitig als Aktivierungswand 4 dient. Das zu aktivierende Fluid ist somit auf derselben Seite vorgesehen, wie die Lichtquelle 5.

Wie Figur 4 zeigt, kann die zweite Ausführungsform ebenfalls durch einen Durchflusskanal 6 erweitert sein, wobei jedoch eine der Kanalbegrenzungswände 7 lichtdurchlässig gestaltet ist, wenn sich die Lichtquelle 5 außerhalb der Vorrichtung befindet. Die Lichtquelle 5 befindet sich dann auf der von dem Aufnahmebehälter 1 abgewandten Seite des Durchflusskanals 6 bzw. der lichtdurchlässigen Kanalbegrenzungswand 7, so dass das Licht durch die lichtdurchlässigen Kanalbegrenzungswand 7 in den Durchflusskanal 6 strahlt und weiter durch die Lichteinfall- und Aktivierungswand 3, 4 in die Aufnahmekammer 2. Die Lichtquelle kann aber auch in diejenige Kanalbegrenzungswand 7 integriert sein, die der Lichteinfall- und Aktivierungswand 3, 4 gegenüberliegend angeordnet ist. In diesem Fall muss die Kanalbegrenzungswand 7 nicht lichtdurchlässig gestaltet sein. Es können Lichtquellen 5 in Form von LEDs vorgesehen sein, die in die Kanalbegrenzungswand 7 eingelassen sind.

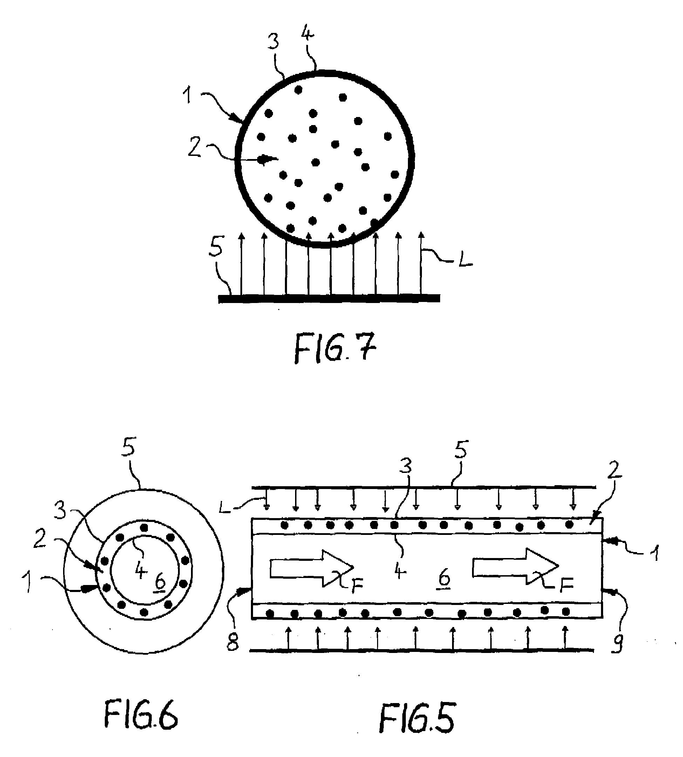

Figuren 5 und 6 zeigen eine dritte Ausführungsform einer erfindungsgemäßen Vorrichtung, wobei Bauteile, die mit Bauteilen der Figur 2 übereinstimmen, mit denselben Bezugszeichen versehen sind.

Der Aufnahmebehälter 1 ist als doppelwandiges Rohr mit einer Lichteinlasswand 3 in Form eines äußeren Rohrs und einer Aktivierungswand 4 in Form eines koaxial zum äußeren Rohr und innerhalb diesem angeordneten inneren Rohr. Die Aufnahmekammer 2 ist zwischen den beiden Rohren gebildet.

Um den rohrförmigen Aufnahmebehälter 1 ist eine Lichtquelle 5 angeordnet, die ebenfalls rohrförmig gestaltet ist und koaxial zum Aufnahmebehälter 1 und um diesen herum angeordnet ist. Hierbei kann es sich zum Beispiel um ein flexibles Lichtelement in Form einer Leuchtdiode (LED) oder einer organischen Leuchtdiode (OLED) handeln. Die Lichtquelle 5 muss jedoch nicht rohrförmig gestaltet sein. Es können auch andere Lichtquellen 5, wie sie zu den ersten beiden Ausführungsformen beschrieben wurden, vorgesehen sein, die die Aufnahmekammer 2 nur einseitig oder von in der Anzahl begrenzten Seiten anstrahlen.

Die rohrförmige Aktivierungswand 4 bildet in ihrem Inneren einen Durchflusskanal 6 zum Transportieren des zu aktivierenden Fluids.

Eine vierte Ausführungsform einer erfindungsgemäßen Vorrichtung zeigt Figur 7, wobei Bauteile, die mit Bauteilen der Figur 1 übereinstimmen, mit denselben Bezugszeichen versehen sind.

Der Aufnahmebehälter 1 ist hohlkugelförmig gestaltet und vollständig transparent. In dem hohlkugelförmigen Aufnahmebehälter 1 ist die Aufnahmekammer 2 gebildet. Von außen wird der Aufnahmebehälter 1 angestrahlt, wobei ein der Lichtquelle 5 zugewandter Wandabschnitt des Aufnahmebehälters 1 die Lichteinfallswand 3 darstellt. Der gesamte umhüllende hohlkugelförmige Wand des Aufnahmebehälters 1 kann als Aktivierungswand 4 dienen, je nachdem wo sich zu aktivierendes Fluid um den Aufnahmebehälter 1 herum befindet.

Bezugszeichenliste
- 1: Aufnahmebehälter
- 2: Aufnahmekammer
- 3: Lichteinfallwand
- 4: Aktivierungswand
- 5: Lichtquelle
- 6: Durchflusskanal
- 7: Kanalbegrenzungswand
- 8: Einlassöffnung
- 9: Auslassöffnung
- 10: Kanalbegrenzungswand

- L: Licht
- F: Fluid

## Patentansprüche

1. Vorrichtung zur Erzeugung eines durch Singulett-Sauerstoff aktivierten Fluids umfassend:
einen Aufnahmebehälter (1), der eine Aufnahmekammer (2), die zumindest mit einem Photosensibilisator und mit in den Singulett-Zustand anregbaren Sauerstoff befüllt ist, umschließt,
wobei der Aufnahmebehälter (1) zumindest eine lichtdurchlässige Lichteinfallwand (3) aufweist, durch die Licht von außen in die Aufnahmekammer (2) einfallen kann,
**dadurch gekennzeichnet,**
**dass** die Aufnahmekammer (2) nach außen hin vollständig geschlossen ist und
**dass** der Aufnahmebehälter (1) zumindest eine lichtdurchlässige Aktivierungswand (4) aufweist, an deren von der Aufnahmekammer (2) abgewandten Seite das zu aktivierende Fluid aktiviert werden kann.

2. Vorrichtung nach Anspruch 1,
**dadurch gekennzeichnet,**
**dass** die Lichteinfallwand (3) gleichzeitig die Aktivierungswand (4) darstellt.

3. Vorrichtung nach Anspruch 1,
**dadurch gekennzeichnet,**
**dass** auf einer ersten Seite der Aufnahmekammer (2) die Lichteinfallwand (3) und auf einer zweiten Seite die Aktivierungswand (4) vorgesehen ist.

4. Vorrichtung nach einem der vorangehenden Ansprüche,
**dadurch gekennzeichnet,**
**dass** der Aufnahmebehälter (1) quaderförmig gestaltet ist

5. Vorrichtung nach einem der vorangehenden Ansprüche,
**dadurch gekennzeichnet,**
**dass** der Aufnahmebehälter (1) als Kugel gestaltet ist.

6. Vorrichtung nach einem der vorangehenden Ansprüche,
**dadurch gekennzeichnet,**
**dass** der Aufnahmebehälter (1) ein äußeres Rohr und ein inneres Rohr umfasst, die ineinander angeordnete sind, wobei die Aufnahmekammer (2) zwischen den beiden Rohren gebildet ist, und
**dass** das äußere Rohr die Lichteinlasswand (3) und das innere Rohr die Aktivierungswand (4) darstellt.

7. Vorrichtung nach einem der vorangehenden Ansprüche,
**dadurch gekennzeichnet,**
**dass** der Photosensibilisator in Pulverform vorliegt.

8. Vorrichtung nach einem der vorangehenden Ansprüche,
**dadurch gekennzeichnet,**
**dass** für einen Lichteinfall in die Aufnahmekammer (2) eine Lichtquelle (5) vorgesehen ist, die auf der der Aufnahmekammer (2) abgewandten Seite der mindestens einen Lichteinfallwand (3) angeordnet ist.

9. Vorrichtung nach einem der vorangehenden Ansprüche,
**dadurch gekennzeichnet,**
**dass** ein Durchflusskanal (6) für das zu aktivierende Fluid vorgesehen ist, der auf der der Aufnahmekammer (2) abgewandten Seite der mindestens einen Aktivierungswand (4) angeordnet ist und unmittelbar an diese angrenzt.

10. Vorrichtung nach einem der vorangehenden Ansprüche,
**dadurch gekennzeichnet,**
**dass** der Durchflusskanal (6) auf der der Aufnahmekammer (2) abgewandten Seite einer lichtdurchlässigen Wand, die sowohl die Lichteinfallwand (3) als auch die Aktivierungswand (4) darstellt, durch eine lichtdurchlässige Kanalbegrenzungswand (7) begrenzt ist und
**dass** für einen Lichteinfall in die Aufnahmekammer (2) auf der der Aufnahmekammer (2) abgewandten Seite der Kanalbegrenzungswand (7) zumindest eine Lichtquelle (5) angeordnet ist.

11. Vorrichtung nach einem der Ansprüche 1 bis 9,
**dadurch gekennzeichnet,**
**dass** der Durchflusskanal (6) auf der der Aufnahmekammer (2) abgewandten Seite der mindestens einen lichtdurchlässigen Wand, die sowohl die Lichteinfallwand (3) als auch die Aktivierungswand (4) darstellt, durch eine Kanalbegrenzungswand (7) begrenzt ist, in die für einen Lichteinfall in die Aufnahmekammer (2) zumindest eine Lichtquelle (5) integriert ist.

12. Verfahren zur Erzeugung eines durch Singulett-Sauerstoff aktivierten Fluids mit den Verfahrensschritten:
Bereitstellen eines Photosensibilisators und Bereitstellen von Sauerstoff in einer durch einen Aufnahmebehälter (1) gebildeten Aufnahmekammer (2) und
Bestrahlen des Photosensibilisators mit Licht durch eine lichtdurchlässige Lichteinfallwand (3) des Aufnahmebehälters (1),
**dadurch gekennzeichnet,**
**dass** das Fluid außerhalb der Aufnahmekammer entlang einer lichtdurchlässigen Aktivierungswand des Aufnahmebehälters vorbeigeleitet wird.

13. Verfahren nach Anspruch 12,
**dadurch gekennzeichnet,**
**dass** die Spektralverteilung an den maximalen Absorptionswellenlängenbereich des Photosensibilisators angepasst ist.

14. Vorrichtung nach einem der Ansprüche 12 oder 13,
**dadurch gekennzeichnet,**
**dass** es sich bei dem Fluid um feuchte Luft oder um Wasser in der flüssigen Phase handelt.

## Geänderte Patentansprüche

### Geänderte Patentansprüche gemäss Regel 86(2) EPÜ.

**1.** Vorrichtung zur Erzeugung eines durch Singulett-Sauerstoff aktivierten Fluids umfassend:
einen Aufnahmebehälter (1), der eine Aufnahmekammer (2), die zumindest mit einem Photosensibilisator und mit in den Singulett-Zustand anregbaren Sauerstoff befüllt ist, umschließt,
wobei der Aufnahmebehälter (1) zumindest eine lichtdurchlässige Lichteinfallwand (3) aufweist, durch die Licht von außen in die Aufnahmekammer (2) einfallen kann,
wobei die Aufnahmekammer (2) nach außen hin vollständig geschlossen ist
**dadurch gekennzeichnet,**
**dass** der Aufnahmebehälter (1) zumindest eine lichtdurchlässige Aktivierungswand (4) aufweist, an deren von der Aufnahmekammer (2) abgewandten Seite das zu aktivierende Fluid aktiviert werden kann, und
**dass** ein Durchflusskanal (6) für das zu aktivierende Fluid vorgesehen ist, der auf der der Aufnahmekammer (2) abgewandten Seite der mindestens einen Aktivierungswand (4) angeordnet ist und unmittelbar an diese angrenzt.

**2.** Vorrichtung nach Anspruch 1,
**dadurch gekennzeichnet,**
**dass** die Lichteinfallwand (3) gleichzeitig die Aktivierungswand (4) darstellt.

**3.** Vorrichtung nach Anspruch 1,
**dadurch gekennzeichnet,**
**dass** auf einer ersten Seite der Aufnahmekammer (2) die Lichteinfallwand (3) und auf einer zweiten Seite die Aktivierungswand (4) vorgesehen ist.

**4.** Vorrichtung nach einem der vorangehenden Ansprüche,
**dadurch gekennzeichnet,**
**dass** der Aufnahmebehälter (1) quaderförmig gestaltet ist.

**5.** Vorrichtung nach einem der vorangehenden Ansprüche,
**dadurch gekennzeichnet,**
**dass** der Aufnahmebehälter (1) als Kugel gestaltet ist.

**6.** Vorrichtung nach einem der vorangehenden Ansprüche,
**dadurch gekennzeichnet,**
**dass** der Aufnahmebehälter (1) ein äußeres Rohr und ein inneres Rohr umfasst, die ineinander angeordnete sind, wobei die Aufnahmekammer (2) zwischen den beiden Rohren gebildet ist, und
**dass** das äußere Rohr die Lichteinlasswand (3) und das innere Rohr die Aktivierungswand (4) darstellt.

**7.** Vorrichtung nach einem der vorangehenden Ansprüche,
**dadurch gekennzeichnet,**
**dass** der Photosensibilisator in Pulverform vorliegt.

**8.** Vorrichtung nach einem der vorangehenden Ansprüche,
**dadurch gekennzeichnet,**
**dass** für einen Lichteinfall in die Aufnahmekammer (2) eine Lichtquelle (5) vorgesehen ist, die auf der der Aufnahmekammer (2) abgewandten Seite der mindestens einen Lichteinfallwand (3) angeordnet ist.

**9.** Vorrichtung nach einem der vorangehenden Ansprüche,
**dadurch gekennzeichnet,**
**dass** der Durchflusskanal (6) auf der der Aufnahmekammer (2) abgewandten Seite einer lichtdurchlässigen Wand, die sowohl die Lichteinfallwand (3) als auch die Aktivierungswand (4) darstellt, durch eine lichtdurchlässige Kanalbegrenzungswand (7) begrenzt ist und
**dass** für einen Lichteinfall in die Aufnahmekammer (2) auf der der Aufnahmekammer (2) abgewandten Seite der Kanalbegrenzungswand (7) zumindest eine Lichtquelle (5) angeordnet ist.

**10.** Vorrichtung nach einem der Ansprüche 1 bis 8,
**dadurch gekennzeichnet,**
**dass** der Durchflusskanal (6) auf der der Aufnahmekammer (2) abgewandten Seite der mindestens einen lichtdurchlässigen Wand, die sowohl die, Lichteinfallwand (3) als auch die Aktivierungswand (4) darstellt, durch eine Kanalbegrenzungswand (7) begrenzt ist, in die für einen Lichteinfall in die Aufnahmekammer (2) zumindest eine Lichtquelle (5) integriert ist.
